# FASCICULE DE BREVET EUROPEEN

(11) **EP 3 017 210 B1**
(45) Date de publication et mention de la délivrance du brevet: **04.10.2017**
(21) Numéro de dépôt: 14790123.5
(22) Date de dépôt: 01.07.2014
(51) Int. Cl.: F16D 55/224, F16D 65/18, F16D 125/04, F16D 125/06

(54) **DISPOSITIF DE FREINAGE PAR PISTON À FONCTION DE RECUL TOTAL**
BREMSVORRICHTUNG MIT EINEM KOLBEN MIT VOLLSTÄNDIGER RÜCKSTOSSFUNKTION
BRAKING DEVICE USING A PISTON WITH TOTAL RECOIL FUNCTION

(30) Priorité: 03.07.2013 FR 1356511
(43) Date de publication de la demande: 11.05.2016
(73) Titulaire: STROMAG FRANCE SAS, 18150 La Guerche-sur-l'Aubois (FR)
(72) Inventeur: BROUILLARD, Guillaume, F-18000 Bourges (FR); BABISE, David, F-58200 Pougny (FR)
(74) Mandataire: Santarelli
(86) Numéro de dépôt international: PCT/FR2014/051682
(87) Numéro de publication internationale: WO 2015/001245

(56) Documents cités:
- FR-A1- 2 950 121
- GB-A- 1 062 248
- US-A- 2 997 138
- US-A- 3 112 014

## Description

L'invention concerne un dispositif de freinage par piston(s) ayant une fonction de recul total du (ou des) piston(s). Elle vise notamment un dispositif de freinage contribuant au contrôle de la giration des nacelles d'éoliennes (freinage d'azimut) mais se généralise à bien d'autres applications de freinage, dans lesquelles on recherche des dispositifs de freinage ayant un encombrement réduit et un entretien rapide le plus simple possible.

Une telle fonction de recul consiste à prévoir que, en l'absence d'une sollicitation d'un piston vers une configuration de freinage, un élément élastique ramène ce piston en arrière. Diverses configurations ont déjà été proposées à ce propos, souvent complexes.

Ainsi, le document US - 3 701 398 a proposé un dispositif de freinage hydraulique à sécurité mécanique mettant en oeuvre un étrier en plusieurs pièces solidaires les unes des autres, un piston coulissant dans une cavité de l'étrier formant un cylindre et solidaire, temporairement, d'une plaquette de freinage, et une tige axiale solidaire du piston et engagée dans un alésage borgne formé dans le piston à l'opposé de la plaquette, cette tige étant entourée par un manchon monté coulissant dans l'étrier ; cette tige coopère par effet de coin avec l'étrier ; des rondelles Belleville sont interposées entre une portée du manchon et une rondelle solidaire du piston en sorte de rappeler en arrière le piston lorsque l'effort de freinage disparaît sur une course donnée.

Le document US - 3 741 354 a proposé un autre dispositif de freinage comportant un double piston formé de deux parties mobiles chacune soumise à une source respective de fluide d'actionnement ; un ressort est comprimé entre une collerette interne d'une partie mobile et une portée formée à l'extrémité avant de l'autre partie mobile engagée dans la première partie en sorte de ramener les parties en contact.

Le document US - 5 291 973 a proposé un autre dispositif de freinage mettant en oeuvre un double étrier comportant deux dispositifs à piston, destinés à assurer le freinage de deux disques accouplés réalisés en des matériaux différents, dont chaque piston est formé d'une paroi cylindrique en étant ainsi creux à l'opposé de la plaquette qu'il sert à appliquer contre un corps à freiner ; deux tiges solidaires du double étrier pénètrent à l'intérieur de ces deux pistons creux, coaxialement à ceux-ci ; chaque piston comporte un ressort comprimé entre la tête épaulée de la tige qui y pénètre et une collerette solidaire du piston et venant en saillie vers l'axe à partir de la paroi interne de celui-ci. Ces pistons sont appliqués contre une pièce à freiner lorsqu'une pression leur est appliquée et les ressorts assurent un recul non défini des pistons lorsque cette pression de freinage disparait.

Le document US - 2005/0284709 a proposé un dispositif comportant un piston coulissant dans un étrier en étant formé de deux pièces vissées l'une dans l'autre en ménageant une cavité entre elles ; dans cette cavité est disposée la tête épaulée d'une tige traversant celle des pièces (pièce interne) qui est vissée à l'intérieur de l'autre en étant axialement fixe, mais mobile en rotation, par rapport à l'étrier ; un dispositif d'ajustement fait tourner la pièce interne par rapport à la pièce externe au fur et à mesure que se produit une usure de la partie de freinage du piston ; un ressort est comprimé entre cette tête épaulée et la pièce interne. L'effort de freinage est appliqué par une liaison mécanique.

Le document KR - 100972216 a proposé un dispositif avec, répartis circonférentiellement dans un piston très plat, présentant sa concavité en direction d'une pièce à freiner, une pluralité d'ensembles élémentaires comportant chacun une pièce cylindrique rapportée au piston en ayant une collerette en saillie vers son axe une tige fixe par rapport à un étrier traversant cette pièce cylindrique et comportant une tête épaulée, un manchon entourant la tige en ayant aussi une collerette venant en saillie vers la pièce rapportée, et un ressort interposé entre cette collerette du manchon et la collerette de la pièce cylindrique.

On connaît en outre, d'après le document FR -2 950 121 un dispositif de contrôle de recul pour plaquettes de frein comportant un étrier, un piston monté coulissant dans un alésage de l'étrier et comportant un petit alésage borgne débouchant à l'opposé de la plaquette qu'il sert à appliquer contre un corps à freiner. Le fond du corps est muni d'une tige fixe par rapport à l'étrier, coaxiale au piston, qui pénètre dans l'alésage du piston ; cette tige est munie d'une collerette près du fond de l'alésage du piston, d'une part et, plus près du fond du corps, un étranglement ; quant à l'alésage du piston, il contient une bague précontrainte appliquée radialement vers la paroi interne de cet alésage. Une rondelle intermédiaire est engagée autour de la tige, dans l'étranglement en sorte d'y avoir un débattement axial, en ayant sa périphérie située axialement entre la bague précontrainte et le fond de l'alésage du piston. Des rondelles Belleville sont comprimées entre la collerette de la tige et cette rondelle intermédiaire. La précontrainte avec laquelle la bague est engagée à l'intérieur de l'alésage du piston est telle que l'effort nécessaire pour déplacer cette bague axialement dans l'alésage est supérieur à l'effort que ces rondelles Belleville peuvent exercer mais inférieur à l'effort qui est appliqué en configuration de freinage. Il en découle un contrôle du recul du piston lorsque l'effort de freinage disparaît.

Ces divers documents ont en commun de proposer, soit des structures complexes et encombrantes, soit des structures susceptibles de se déformer au moment de l'application d'efforts de freinage compte tenu de la configuration creuse de leur piston auprès de la plaquette de freinage.

Le document GB 1 062 248 A montre un dispositif de freinage d'après le préambule de la revendication 1.

L'invention vise à permettre d'assurer de manière plus simple et moins encombrante une fonction de recul efficace dans un dispositif de freinage par piston à alimentation hydraulique intégrée capable de pouvoir laisser un jeu minimum relativement large entre la plaquette et la pièce à freiner, tout en autorisant des variations du jeu en fonction de fluctuations dans l'usure des garnitures des plaquettes, et en étant capable de maintenir dans une position donnée le piston en l'absence de pression ou lorsqu'il est soumis à une pression résiduelle déterminée.

Elle propose à cet effet un dispositif de freinage comportant :
* un étrier destiné à longer une piste de frottement d'une pièce susceptible de devoir être freinée,
* un logement dans cet étrier ayant un axe donné et dans le fond duquel débouchent des ports de connexion hydraulique, destinés à permettre l'application dans ce logement d'une pression de freinage, l'un de ces ports de connexion hydraulique étant situé en une position centrale par rapport à ce fond du logement,
* un piston monté coulissant dans ce logement en étant muni à une extrémité d'une plaquette de freinage destinée à venir au contact de ladite piste de frottement et comportant une cavité débouchant à l'autre extrémité faisant face au fond du logement, cette cavité ayant une dimension axiale substantiellement inférieure à la dimension axiale de ce piston,
* une tige centrale creuse fixée au fond de ce logement dans le prolongement du port de connexion hydraulique situé en position centrale et comportant une tête épaulée en une extrémité située à l'intérieur de la cavité, et
* un empilement de rondelles Belleville comprimées entre cette tête épaulée et une collerette venant en saillie par rapport à la paroi interne de la cavité, radialement vers la tige centrale, en étant solidaire de ce piston, cet empilement étant conçu pour assurer un recul total du piston vers le fond du logement, jusqu'en une configuration en butée par rapport au fond de l'étrier, lorsque la pression de freinage appliquée par l'intermédiaire desdits ports baisse en dessous d'un seuil déterminé.

On peut noter que le piston est monobloc en ce sens qu'il n'est pas formé de plusieurs pièces mobiles l'une par rapport à l'autre ; il est en outre massif en ce que, au moins à proximité de la plaquette, il est formé de matière sur toute sa section (la cavité ne s'étend que sur une partie de la dimension du piston suivant laquelle il se déplace dans le cylindre ; le piston ne se réduit donc pas à simple paroi cylindrique) de sorte que la cavité ne représente qu'une partie du volume du piston ; il en résulte que le piston permet d'appliquer des efforts de freinage importants sans se déformer, notamment en regard de la cavité. Ce caractère massif à proximité de la plaquette de frein a notamment pour avantages de conférer au piston une bonne rigidité ainsi que d'éviter que la pression de freinage soit concentrée en une partie centrale de la plaquette, au risque de provoquer un bombement de la surface de celle-ci.

On appréciera qu'un tel dispositif se distingue de l'enseignement du document FR - 2 950 121 par le fait que la tige centrale creuse n'intervient que par sa tête épaulée et peut donc avoir une géométrie bien plus simple, tandis que l'empilement de rondelles Belleville est interposé entre cette tête épaulée et une collerette désormais solidaire du piston, en sorte d'assurer un recul jusqu'à la venue en butée du piston par rapport à son cylindre. Cette simplification par rapport à ce document antérieur allait toutefois à l'encontre de la tendance de l'homme de métier qui pensait a priori nécessaire de conserver un contrôle du recul, à un niveau juste suffisant pour compenser l'usure de la plaquette. En effet, il est généralement demandé à un dispositif de freinage par piston de conserver un jeu constant entre la garniture et la piste de frottement de la pièce à freiner afin, d'une part, de rompre efficacement le contact lorsque le frein n'est pas appliqué, et, d'autre part, garantir un temps de réponse rapide ; puisque ce temps de réponse est en pratique fixé par la distance que le piston doit parcourir avant d'amener la garniture au contact de la piste de frottement, cela a amené jusqu'à présent l'homme de métier à conclure qu'il fallait dans tout système de freinage un contrôle du recul, sur une distance contrôlée en fonction de l'usure. Il y avait donc un préjugé qui dissuadait l'homme de métier d'admettre de laisser le piston reculer dans une configuration de recul, constante par rapport au fond du cylindre, indépendamment de l'état d'usure de la plaquette de frein. Toutefois, notamment grâce à la présence d'un port d'arrivée de fluide hydraulique et d'un port de sortie de ce fluide, il est apparu que l'invention permettait de satisfaire à ces contraintes précitées ; en effet, la présence de deux orifices d'arrivée et de sortie de fluide garantit que, lors de la mise en service du dispositif de freinage, il y a une purge efficace de tout l'air initialement contenu dans la cavité du cylindre, laquelle se remplit donc complètement de fluide hydraulique (donc incompressible), d'où une meilleure réactivité en cas d'application d'efforts de freinage.

On comprend donc que le fait d'admettre un recul total, vers une configuration prédéterminée en butée, constante au cours du temps, permet une grande simplification par rapport aux configurations connues qu'il s'agisse du document FR - 2 950 121, ou des documents US - 3 701 398, US - 3 741 354 ou US - 2005/284709 (d'autant que celui-ci n'utilise pas de fluide hydraulique) analysés ci-dessus.

Par rapport au document US - 5 291 973, l'invention se distingue par le fait qu'elle met en oeuvre des rondelles Belleville, par le fait que le recul se fait jusqu'à venir en butée par rapport au fond du cylindre, par le caractère massif du piston ainsi que par la présence des deux orifices d'arrivée/sortie de fluide. En fait, bien qu'il ait déjà été proposé d'utiliser des rondelles Belleville pour assurer un recul d'un piston de freinage, le fait d'en utiliser dans la configuration de l'invention a pour avantage, par rapport à ce document US - 5 291 973, d'obtenir, malgré l'existence, en pratique, d'une pression résiduelle déterminée non nulle, un rapport élevé entre l'effort de rappel obtenu et l'encombrement et la flèche de l'élément élastique. Il est à noter que ce document mentionne simplement l'existence de ressorts de rappel, sans se préoccuper de la configuration vers laquelle un tel rappel est réalisé. Pourtant, le fait d'assurer le recul jusqu'à une configuration de butée bien définie a pour avantage, par rapport à ce document, de positionner avec précision le piston pour lui permettre de prendre rapidement, lorsque cela est nécessaire, une configuration efficace de pression sur la plaquette de frein, même lorsqu'il y a un intervalle important entre la plaquette de frein et la piste de frottement de la pièce à freiner.

Par rapport au document KR - 100913427, l'invention se distingue par le fait que le mécanisme de recul complet est entièrement intégré au piston, lequel présente en pratique une hauteur de guidage relativement proche de son diamètre. Le mécanisme de retour peut ainsi être placé de manière coaxiale au piston, alors que, dans ce document antérieur, l'homme de métier s'est retrouvé contraint, par la configuration encombrante du système et les dimensions d'un piston d'une hauteur relativement faible devant son diamètre, de mettre en oeuvre plusieurs sous-ensembles de recul répétés de manière circulaire autour de l'axe du piston (ce qui est susceptible de présenter des difficultés de synchronisme), et ce à l'extérieur du circuit hydraulique d'actionnement.

Ainsi que cela a été exposé ci-dessus, le fait que le recul total du piston soit le même indépendamment de l'état d'usure de la plaquette a pour avantages de proposer un système autorisant un débattement important du disque par rapport à l'étrier lorsque le frein n'est pas appliqué, et de simplifier la conception par rapport à un mécanisme de rattrapage d'usure automatique qui offrirait le même avantage, tout en conservant une grande réactivité du fait de la présence des orifices d'arrivée/sortie du fluide hydraulique. Il est à ajouter que dans le cas du recul total, la pression résiduelle minimale nécessaire au retour complet reste identique quel que soit l'état d'usure de la garniture.

Le dispositif de l'invention permet d'intégrer l'alimentation hydraulique du frein grâce au fait que la tige centrale épaulée servant d'appui fixe à l'élément élastique est creuse, étant raccordée à l'un des ports hydrauliques. Il en résulte des avantages en termes d'encombrement, mais aboutit surtout à un système hydraulique facilitant les opérations de purge avec l'autre port hydraulique. Les deux volumes hydrauliques du fond de cylindre et de l'intérieur du piston sont en effet directement connectables au circuit de commande via ces deux ports hydrauliques.

L'encombrement du piston n'est pas modifié par la mise en oeuvre de l'invention puisque les pièces assurant le recul total sont complètement intégrées au volume de ce piston.

A titre subsidiaire, on peut noter que l'invention permet en outre d'intégrer une protection anti-corrosion en raison du fait que l'intégralité du système de recul se situe dans le circuit d'huile, donc isolé de tout composé oxydant.

La cavité formée dans le piston peut être obtenue lors d'une opération de forgeage du piston mais peut aussi être formée d'un alésage, donc cylindrique, ce qui confère à la géométrie globale une symétrie de révolution ; toutefois, cette cavité peut aussi, si le besoin s'en fait sentir, avoir une autre forme à symétrie de révolution (tronconique - ce qui peut permettre la mise en oeuvre de rondelles Belleville de diamètres différents) ; en variante la cavité peut aussi avoir une forme polygonale ou ovale, notamment.

Lorsque le piston est d'un seul tenant (notamment dans le cas d'une fabrication par forgeage), la cavité ayant été formée à partir de la face arrière de celui-ci, la collerette est rapportée au piston, par exemple par soudure, vissage ou au moyen d'un circlips. En variante, la cavité est une partie résiduelle d'un trou traversant axialement tout le piston (par exemple obtenu à partir de la face avant de ce piston), ensuite en partie obturé par un bouchon fixé au reste du piston, par exemple vissé ou soudé, auquel cas la collerette peut être d'un seul tenant avec le piston, résultant d'un simple changement de réglage de l'usinage de formation de ce logement.

De manière avantageuse, le piston vient en butée contre le fond du logement par l'intermédiaire de la collerette avec laquelle coopère l'empilement de rondelles Belleville ; ainsi l'effort appliqué par l'empilement est, en configuration de recul total, appliqué presque directement sur le fond du logement.

La cavité a avantageusement un volume supérieur mais proche de celui de l'empilement en configuration de recul total (par exemple supérieur d'au plus 50% voire 25% de ce volume), de manière à conserver un maximum de rigidité à ce piston tout en minimisant le volume de fluide hydraulique à amener pour provoquer une action de freinage.

Il est avantageux de respecter certains rapports de dimension pour garantir une bonne rigidité de l'ensemble et donc une bonne efficacité, notamment :
- le piston a une dimension axiale valant entre 1/2 et 3/2 de la largeur moyenne de ce piston, et/ou
- la dimension axiale de la cavité est comprise entre 40% et 90% de la dimension axiale du piston et/ou
- la dimension transversale moyenne de la cavité du piston est comprise entre ½ et 2/3 de la dimension transversale moyenne de ce piston.

Des objets, caractéristiques et avantages de l'invention ressortent de la description donnée ci-après en regard des dessins annexés sur lesquels :
- la figure 1 est une vue en coupe d'un dispositif de freinage conforme à l'invention, dans un premier mode de réalisation et,
- la figure 2 est une vue en coupe d'un autre dispositif de freinage conforme à l'invention, dans un second mode de réalisation de réalisation.

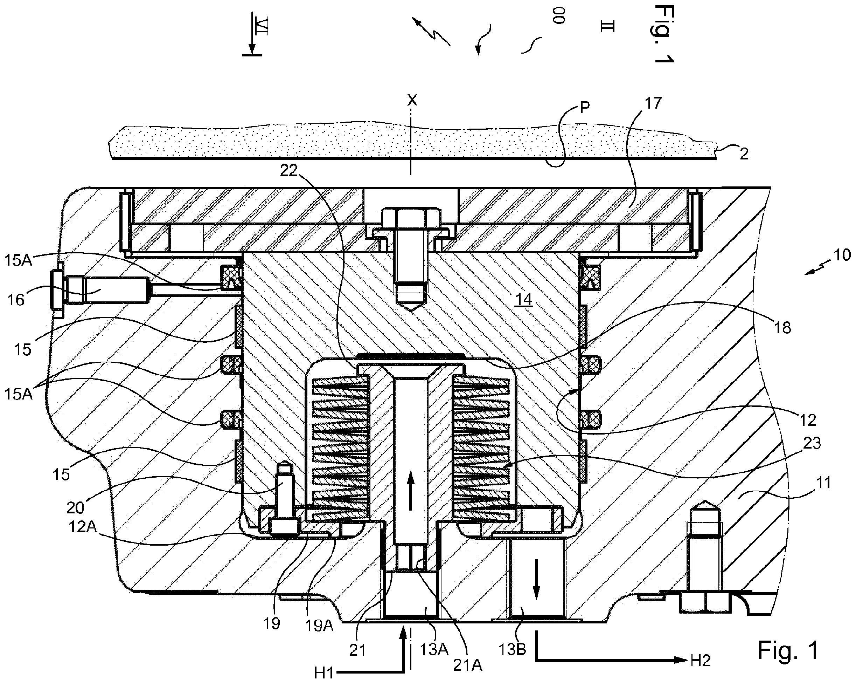

La figure 1 représente un dispositif de freinage désigné par la référence 10 comportant un étrier 11 (représenté uniquement en partie) et divers éléments contenus dans le volume de cet étrier.

Cet étrier est destiné à être positionné auprès d'une piste de frottement d'une pièce susceptible de devoir être freinée au moyen du dispositif de freinage représenté ; cette piste de frottement est schématisée, de manière partielle, sous la référence P. Cette piste de frottement peut être portée par une pièce en rotation, par exemple autour d'un axe coplanaire au plan de cette figure 1 (en variante, la piste peut être située sur la tranche d'une pièce en rotation autour d'un axe perpendiculaire au plan de cette figure) ; cette piste peut aussi être portée par une pièce en mouvement rectiligne, par exemple parallèle au plan de la figure 1.

Dans cet étrier 11 est formé un logement 12 s'étendant suivant un axe X-X dirigé vers la piste de frottement ; ce logement a, transversalement à cet axe, une section qui est constante à celui-ci, ce qui correspond à la définition mathématique d'un « cylindre » ; cette section est de préférence ici circulaire est peut donc être qualifié de cylindre selon la signification habituelle de ce mot. On comprend toutefois qu'en variante, ce logement peut avoir une section polygonale ou ovale, en fonction des besoins.

Ce logement a un fond (globalement perpendiculaire à l'axe X-X), noté 12A, dans lequel sont ménagés deux ports de connexion hydraulique, notés 13A et 13B ; l'un d'entre eux, 13A, est situé en une position centrale dans ce fond, centré sur l'axe X-X. Les deux ports 13A et 13B sont destinés à être connectés à un circuit hydraulique, en partie schématisé par des lignes H1 et H2, capable d'appliquer une pression de freinage à l'intérieur de ce logement par circulation d'un fluide hydraulique entrant par l'un des ports et sortant par l'autre des ports ; dans l'exemple représenté, l'arrivée se fait par le port central 13A. On comprend que deux ports suffisent pour permettre une telle circulation de fluide hydraulique, mais qu'en variante, leur nombre peut être plus important, notamment avec un port central ayant une section donnée et une pluralité de ports de sortie plus petits répartis autour de l'axe, même si cela peut être un petit peu plus complexe à réaliser.

Le fluide hydraulique est, de manière classique en soi, de l'huile, mais peut aussi être constitué par un autre fluide incompressible tel que de l'eau.

Dans le logement est monté un piston noté 14 dont la section est complémentaire à celle du logement de manière à pouvoir coulisser axialement dans ce logement, avec des jeux appropriés ; ce coulissement est favorisé par des rondelles 15 ayant également un rôle d'étanchéité vis-à-vis du fluide hydraulique contenu dans l'espace entre le piston et le fond du logement. De manière également connue en soi un canal sensiblement radial, noté 16, permet d'évacuer l'éventuel débit de fluide qui viendrait à franchir ces rondelles.

A ce piston 14 est fixée, par tout moyen connu approprié, une plaquette de freinage 17 destinée à être plaquée contre la piste de frottement lorsqu'un freinage doit être exercé.

Dans ce piston est ménagée une cavité débouchant à l'opposé de la plaquette de freinage, vers le fond du logement 12. Cette cavité notée 18 a une dimension axiale substantiellement inférieure à la dimension axiale de ce piston, de manière à minimiser le risque que, lors de l'application d'une pression de freinage entre le piston et le fond du logement, la partie du piston longeant la plaquette de freinage vienne à se bomber et nuise à la bonne répartition du frottement de freinage sur la surface de la plaquette de freinage lors de son application contre la piste de frottement.

Cette cavité est centrée sur l'axe X-X du logement du piston ; elle présente avantageusement une symétrie de révolution autour de cet axe. Cette cavité est ici cylindrique à section circulaire constante ; toutefois, en variante, elle peut avoir une forme tronconique, avec une section qui augmente en direction du fond du logement. En variante, cette cavité peut avoir une section polygonale régulière.

Cette cavité comporte, près de son embouchure vers le fond du logement, une restriction de section qui est ici formée d'une collerette 19 rapportée par tout moyen approprié au piston, ici au moyen de vis (ce qui en permet un démontage) dont l'une est désignée par la référence 20.

Une tige creuse 21 est fixée au piston en une position centrale par rapport au logement 12, dans le prolongement du port central de connexion hydraulique 13A ; cette tige est ici vissée à l'étrier mais peut, en variante, lui être solidarisée par toute autre technique appropriée, par exemple par soudage.

Cette tige centrale s'étend axialement dans la cavité sur une distance inférieure à sa profondeur axiale, c'est-à-dire que, lorsque le piston est dans une position de recul maximal, en butée contre le fond du logement, la tête 22 de cette tige est à une distance non nulle du fond de la cavité 18 ; cette tête ne contribue donc pas à la définition de la position de recul maximal.

Cette position de recul maximal est définie par la venue en butée d'une portion du piston située en regard du fond du logement ; cette portion du piston qui vient en butée contre le fond du logement est ici une nervure circonférentielle 19A portée par la collerette 19 ; en variante, une telle collerette est formée sur la face du piston proprement dit qui est en regard du fond du logement. Selon encore une autre variante, la position de recul maximal du piston dans le logement est définie par une ou plusieurs saillies formées au fond du logement en direction du piston, voire par une combinaison de saillies formées sur chacune de ces deux pièces.

Ce piston est ici d'un seul tenant, étant formé avec sa cavité lors d'une étape de forgeage avantageusement suivie d'une étape de formation par usinage d'un lamage dans une partie centrale du fond de la cavité pour garantir un espace axial non nul entre cette partie centrale et la tête de la tige centrale.

La tête 22 de la tige 21 est épaulée en sorte de présenter un épaulement en direction du fond du logement.

Entre cet épaulement de la tête épaulée et la collerette solidaire du piston est comprimé un empilement de rondelles Belleville entourant la tige centrale 21 et désignées sous la référence 23. Ces rondelles Belleville ont ici une géométrie commune, avec notamment des diamètres extérieurs égaux.

Un intérêt d'utiliser des rondelles Belleville est d'obtenir une raideur pouvant être importante pour une flèche et un encombrement faibles.

En fonctionnement, lorsque du fluide hydraulique est introduit dans le volume situé entre le piston et le fond du logement, le piston est forcé de se déplacer vers l'extérieur de ce logement, en sorte d'appliquer la plaquette de freinage contre la piste de frottement, avec un effort qui est d'autant plus élevé que la pression de fluide hydraulique appliquée par le fluide hydraulique est élevée.

Lorsque cette pression de freinage diminue, l'empilement des rondelles Belleville 23 tend à faire reculer le piston vers le fond du logement ; lorsque la pression diminue en dessous d'un seuil donné, l'empilement fait reculer le piston jusqu'à sa venue en butée contre le fond du cylindre ; le piston reste alors dans une configuration bien précise et bien connue jusqu'à la prochaine application d'une pression de freinage bien que, en pratique, le fluide restant dans l'espace entre le piston et le logement soit à une pression résiduelle non nulle.

En pratique, il importe peu que l'espacement entre la plaquette de freinage et la piste de frottement augmente au fur et à mesure qu'augmente l'usure de la garniture de cette plaquette puisque l'effet de freinage peut être obtenu très rapidement du fait que les efforts de freinage sont appliqués au moyen d'un fluide hydraulique circulant entre deux ports 13A et 13B, sans risque de retard dû à l'existence d'un éventuel volume résiduel d'air compressible ; en effet, lors de la mise en service, la présence de ces deux ports garantit qu'il y a une purge complète de tout l'air ayant, avant cette mise en service, occupé le volume situé entre le piston et son logement.

Le fait que, du fait que la tige centrale est creuse et s'étend jusqu'à proximité du fond de la cavité, l'arrivée et l'évacuation de fluide hydraulique se fasse à des niveaux différents dans le dispositif (l'autre port débouchant au fond du logement, a pour avantage de favoriser une bonne circulation du fluide dans l'espace disponible.

Par un choix approprié des rondelles Belleville et de leur empilement, on peut régler avec efficacité le retour de la plaquette de frein lorsque diminue la pression de freinage.

Lorsque la piste de frottement a une grande longueur par rapport à celle de la plaquette de frein, il importe peu que l'usure de cette piste soit régulière ou non, compte tenu de la possibilité d'appliquer des efforts aussi importants qu'on le souhaite, tout en garantissant que le recul complet laisse ensuite subsister un espacement significatif supérieur aux fluctuations d'usure.

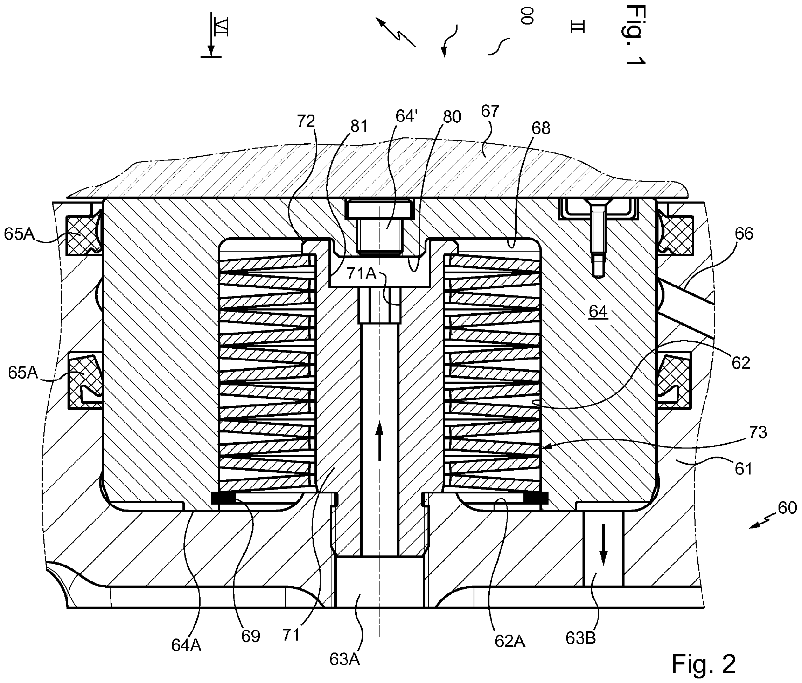

La figure 2 représente un autre dispositif désigné sous la référence 60 ; les éléments similaires à ceux de la figure 1 y sont désignés par des signes de référence découlant de ceux de la figure 1 par addition du nombre 50.

Ainsi cet autre dispositif comporte un étrier 61 dans lequel est formé un logement 62 s'étendant suivant un axe X-X, dont le fond 62A comporte deux ports de connexion hydraulique 63A et 63B, dont l'un (63A) est situé au centre du fond, centré sur l'axe ; dans ce logement, dont la paroi comporte des rondelles d'étanchéité et un canal d'évacuation de fluide (non représenté) coulisse un piston 64 portant une plaquette de freinage 67 ; dans ce piston est ménagée une cavité 68 dont le fond est à distance de la plaquette de freinage ; près de l'embouchure de cette cavité en direction du fond du logement du piston est ménagée une collerette 69 définissant une restriction locale de section ainsi qu'un épaulement vis-à-vis du fond de cette cavité. Dans le prolongement du port de connexion hydraulique central 63A est monté, par exemple par vissage, une tige centrale creuse 71 ayant une tête épaulée 72. Entre la tête épaulée 72 et la collerette 69 solidaire du piston est comprimé un empilement de rondelles Belleville 73.

Ce dispositif 60 diffère principalement de celui de la figure 1 par le fait que, alors que le piston 14 est d'un seul tenant, la cavité 68 est le résultat de la formation d'un trou traversant le piston sur toute sa dimension axiale, lequel est obturé, près de la plaquette de freinage, par un bouchon 64' ; seule la partie de la paroi de ce trou qui reçoit le bouchon doit être formé avec précision. En variante, la fixation peut notamment se faire par soudage.

Quant à la collerette 69 sur laquelle l'empilement de rondelles Belleville prend appui, à la différence de celle de la figure 1 qui est une pièce rapportée par vissage, elle est ici formée d'un circlips engagé dans une gorge formée dans la paroi du trou. Cela explique que la portée 64A par laquelle piston vient en butée contre le fond du logement 62 est ici formée sur le piston lui-même. Bien entendu, cette collerette pourrait être aussi une pièce rapportée par vissage ou soudage, voire être d'un seul tenant avec le reste du piston (si le trou est réalisé par usinage, il suffit de faire pénétrer l'outil par le dessus, et de réduire le diamètre à l'endroit de la collerette).

Le dispositif 60 présente une autre différence par rapport à celui de la figure 1 liée à la forme de la tête épaulée 72 de la tige centrale ; en effet le fond de la cavité, formé par une face du bouchon 64', comporte une protubérance 80 adaptée à pénétrer dans une portion élargie 81 de cette tête ; cela peut contribuer à maintenir un bon centrage de la tige par rapport au logement.

Ces différences du dispositif 60 par rapport au dispositif 10 constituent des options indépendantes dont la présence peut être choisie en fonction des besoins.

Par contre les dispositifs 10 et 60 ont en commun que l'empilement 23 ou 73 comporte un nombre impair de rondelles Belleville (par exemple compris entre 5 et 15, ici au nombre de 13), permettant que la rondelle Belleville la plus proche du fond du logement soit en appui par sa périphérie contre la collerette tandis que la rondelle Belleville la plus proche du fond de la cavité est en appui par sa portion centrale avec l'épaulement de la tête épaulée de la tige, les rondelles intermédiaires étant disposées tête-bêche en sorte de pouvoir ajouter leurs raideurs respectives. Ces rondelles peuvent être identiques ou présenter une progressivité de leurs raideurs, voire de leurs dimensions, en fonction des besoins.

On peut noter que, dans les dispositifs 10 et 60, les portées 19A ou 64A d'appui contre le fond du logement sont situées à proximité immédiate de la périphérie de la rondelle Belleville la plus proche du fond du logement (la portée 19A est même axialement en regard de cette périphérie) ; cela a pour avantage de minimiser les efforts de flexion résultant de la poussée de l'empilement des rondelles Belleville contre le fond du logement.

En variante la cavité est tronconique, ce qui permet de mettre en oeuvre un empilement de rondelles Belleville ayant des diamètres de plus en plus grands en direction du fond de la cavité. La cavité a de préférence un volume à peine supérieure à celui de l'empilement de rondelles Belleville, par exemple au plus 50% au-delà du volume de cet empilement (voire au plus 25%), étant rappelé que la réactivité du dispositif est d'autant meilleure que le volume de fluide hydraulique à mettre en pression est faible. En pratique la forme de la section de la cavité est fixée en fonction de celles des rondelles Belleville (c'est-à-dire circulaire), mais des formes s'en écartant légèrement, par exemple une forme polygonale régulière, peut être choisie en fonction des besoins (il suffit alors d'adapter en conséquence la forme de la collerette rapportée 19).

La section du piston peut être circulaire mais peut, en variante, être de section polygonale lorsque, par exemple, on veut éviter toute possibilité de rotation de la plaquette de freinage ; la notion d'axe X-X représente alors la ligne passant par le centre des sections successives de ce piston.

Il a été mentionné que le port central 13A ou 63A sert à l'arrivée de fluide hydraulique, mais cela n'est qu'une option, dépendant de la connexion effectuée entre le dispositif de freinage et le circuit hydraulique de freinage (non représenté).

D'un point de vue dimensionnel, quelques rapports sont avantageusement respectés :
- la dimension axiale du piston (hauteur sur les dessins) est comprise entre ½ et 3/2 (voire entre ¾ et 5/4) de sa largeur moyenne, c'est-à-dire de sa dimension transversale moyenne (en pratique de son diamètre, s'il a une section circulaire),
- la dimension axiale de la cavité est comprise entre 40% et 90% (voire entre 50% et 75%) de la dimension axiale du piston,
- la dimension transversale moyenne de la cavité du piston est comprise entre ½ et 2/3 de la dimension transversale moyenne du piston,
- la hauteur de l'empilement de rondelles Belleville en configuration de recul total du piston est comprise entre 2/3 et 3/3 de son diamètre, par exemple compris entre 70% et 80%,
- l'écart entre la tête épaulée et le fond de la cavité du piston lorsque le piston est dans sa configuration de recul total est d'au moins 1 % de la dimension axiale de la cavité,
- le diamètre de la tige centrale est compris entre 1/3 et 2/3 du diamètre extérieur des rondelles Belleville (de préférence à peine inférieur au diamètre intérieur de ces rondelles, pour en assurer un guidage efficace

A titre d'exemple, un dispositif conforme à la revendication 1 a les dimensions suivantes :
- diamètre du piston 120 mm
- diamètre de l'empilement de rondelles 70 mm
- diamètre de la tige centrale, 30.5 mm
- hauteur de l'empilement de rondelles 52 mm
- hauteur de la cavité 57 mm
- espace minimum entre la tête épaulée et le fond de la cavité 1 mm
- hauteur du piston 98 mm
- diamètre de la cavité 75 mm.

## Revendications

1. Dispositif de freinage (10, 60) comportant :
* un étrier (11, 61) destiné à longer une piste de frottement (P) d'une pièce (2) susceptible de devoir être freinée,
* un logement (12, 62) dans cet étrier ayant un axe donné et dans le fond duquel débouchent des ports de connexion hydraulique (13A, 13B, 63A, 63B), destinés à permettre l'application dans ce logement d'une pression de freinage, l'un (13A, 63A) de ces ports de connexion hydraulique étant situé en une position centrale par rapport à ce fond du logement,
* un piston (14, 64) monté coulissant dans ce logement en étant muni à une extrémité d'une plaquette de freinage (17, 67) destinée à venir au contact de ladite piste de frottement et comportant une cavité (18, 68) débouchant à l'autre extrémité faisant face au fond du logement, cette cavité ayant une dimension axiale substantiellement inférieure à la dimension axiale de ce piston,
**caractérisé en ce que** le dispositif de freinage comprend :
* une tige centrale creuse (21, 71) fixée au fond de ce logement dans le prolongement du port de connexion hydraulique (13A, 63A) situé en position centrale et comportant une tête épaulée (22, 72) en une extrémité située à l'intérieur de la cavité, et
* un empilement de rondelles Belleville (23, 73) comprimées entre cette tête épaulée et une collerette (19, 69) venant en saillie par rapport à la paroi interne de la cavité, radialement vers la tige centrale, en étant solidaire de ce piston, cet empilement étant conçu pour assurer un recul total du piston vers le fond du logement, jusqu'en une configuration en butée par rapport au fond de l'étrier, lorsque la pression de freinage appliquée par l'intermédiaire desdits ports baisse en dessous d'un seuil déterminé.

2. Dispositif selon la revendication 1, dans lequel la cavité (18, 68) formée dans le piston a une symétrie de révolution autour dudit axe dudit logement.

3. Dispositif selon la revendication 1 ou la revendication 2, dans lequel le piston (14) est d'un seul tenant et la collerette (19) est une pièce rapportée au piston.

4. Dispositif selon la revendication 3, dans lequel le piston (14) est une pièce forgée dans laquelle un lamage est formé par usinage au fond de la cavité en regard de la tête épaulée (22) de la tige centrale.

5. Dispositif selon l'une quelconque des revendications 1 à 4, dans lequel le piston comporte un trou traversant axialement le piston sur toute sa dimension axiale, la collerette venant de matière avec le reste du piston et un bouchon (64') étant fixé au piston en sorte d'obturer l'extrémité du trou du côté opposé au fond du logement.

6. Dispositif selon l'une quelconque des revendications 1 à 5, dans lequel le piston vient en butée contre le fond du logement par l'intermédiaire de la collerette (19) avec laquelle coopère l'empilement de rondelles Belleville.

7. Dispositif selon l'une quelconque des revendications 1 à 6, dans lequel la cavité (18, 68) a un volume supérieur mais proche de celui de l'empilement en configuration de recul total.

8. Dispositif selon l'une quelconque des revendications 1 à 7, dans lequel le piston (14, 64) a une dimension axiale valant entre 1/2 et 3/2 de la largeur moyenne de ce piston.

9. Dispositif selon l'une quelconque des revendications 1 à 8, dans lequel la dimension axiale de la cavité (18, 68) est comprise entre 40% et 90% de la dimension axiale du piston.

10. Dispositif selon l'une quelconque des revendications 1 à 9, dans lequel la dimension transversale moyenne de la cavité (18, 68) du piston est comprise entre ½ et 2/3 de la dimension transversale moyenne de ce piston (14, 64).

## Patentansprüche

1. Bremsvorrichtung (10, 60), Folgendes aufweisend:
- einen Sattel (11, 61), der dazu bestimmt ist, an einer Reibungsstrecke (P) eines Teils (2) vorbeizulaufen, bei dem davon ausgegangen werden kann, dass es gebremst werden muss,
- eine Aufnahme (12, 62) in diesem Sattel, die eine bestimmte Achse hat und in deren Grund hydraulische Anschlussöffnungen (13A, 13B, 63A, 63B) münden, die dazu bestimmt sind, in dieser Aufnahme das Anlegen eines Bremsdrucks zuzulassen, wobei sich eine (13A, 63A) dieser hydraulischen Anschlussöffnungen an einer zentralen Position in Bezug auf diesen Grund der Aufnahme befindet,
- einen Kolben (14, 64), der gleitend in dieser Aufnahme angebracht ist, indem er an einem Ende mit einer Bremsplatte (17, 67) versehen ist, die dazu bestimmt ist, in Kontakt mit der Reibungsstrecke zu gelangen und der einen Hohlraum (18, 68) aufweist, der am anderen Ende mündet, das dem Grund der Aufnahme zugewandt ist, wobei dieser Hohlraum eine axiale Abmessung hat, die im Wesentlichen kleiner ist als die axiale Abmessung dieses Kolbens,
**dadurch gekennzeichnet, dass** die Bremsvorrichtung aufweist:
- eine zentrale hohle Stange (21, 71), die am Grund dieser Aufnahme in der Verlängerung der hydraulischen Anschlussöffnung (13A, 63A) befestigt ist, die sich an der zentralen Position befindet und einen mit einer Schulter versehenen Kopf (22, 72) an einem Ende aufweist, das sich im Inneren des Hohlraums befindet, und
- einen Stapel Tellerfedern (23, 73), die zwischen diesem mit einer Schulter versehenen Kopf und einem Bund (19, 69) zusammengedrückt sind, der in Bezug auf die Innenwand des Hohlraums radial zur zentralen Stange, fest verbunden mit diesem Kolben vorsteht, wobei dieser Stapel dazu konzipiert ist, ein vollständiges Zurückstoßen des Kolbens zum Grund der Aufnahme bis zu einer in Bezug auf den Grund des Sattels in Anschlag befindliche Auslegung sicherzustellen, wenn der mittels der Öffnungen angelegte Bremsdruck unter einen bestimmten Schwellenwert sinkt.

2. Vorrichtung nach Anspruch 1, wobei der im Kolben ausgebildete Hohlraum (18, 68) eine Rotationssymmetrie um die Achse der Aufnahme hat.

3. Vorrichtung nach Anspruch 1 oder Anspruch 2, wobei der Kolben (14) aus einem Stück ist, und der Bund (19) ein an den Kolben angesetztes Teil ist.

4. Vorrichtung nach Anspruch 3, wobei der Kolben (14) ein geschmiedetes Teil ist, in dem eine Flachsenkung durch Bearbeitung am Grund des Hohlraums gegenüber dem mit einer Schulter versehenen Kopf (22) der zentralen Stange ausgebildet ist.

5. Vorrichtung nach einem der Ansprüche 1 bis 4, wobei der Kolben eine Öffnung aufweist, die den Kolben über seine gesamte axiale Abmessung durchquert, wobei der Bund einteilig mit dem Rest des Kolbens ist und ein Verschluss (64') so am Kolben befestigt ist, dass die Öffnung auf der dem Grund der Aufnahme entgegengesetzten Seite verschlossen ist.

6. Vorrichtung nach einem der Ansprüche 1 bis 5, wobei der Kolben am Grund der Aufnahme mittels des Bunds (19) in Anschlag gelangt, mit dem der Stapel Tellerfedern zusammenwirkt.

7. Vorrichtung nach einem der Ansprüche 1 bis 6, wobei der Hohlraum (18, 68) ein Volumen hat, das größer ist als dasjenige des Stapels in der Auslegung vollkommenen Rückstoßes, diesem aber nahekommt.

8. Vorrichtung nach einem der Ansprüche 1 bis 7, wobei der Kolben (14, 64) eine axiale Abmessung hat, die zwischen 1/2 und 2/3 der mittleren Breite dieses Kolbens ausmacht.

9. Vorrichtung nach einem der Ansprüche 1 bis 8, wobei die axiale Abmessung des Hohlraums (18, 68) zwischen 40% und 90% der axialen Abmessung des Kolbens beträgt.

10. Vorrichtung nach einem der Ansprüche 1 bis 9, wobei die mittlere Querabmessung des Hohlraums (18, 68) des Kolbens zwischen 1/2 und 2/3 der mittleren Querabmessung dieses Kolbens (14, 64) beträgt.

## Claims

1. Braking device (10, 60) comprising:
* a calliper (11, 61) intended to run along a friction track (P) of a component (2) that may require braking,
* a housing (12, 62) in this calliper having a given axis and with hydraulic connection ports (13A, 13B, 63A, 63B) opening into the bottom thereof, which are intended to allow application of a braking pressure in said housing, one (13A, 63A) of these hydraulic connection ports being located in a central position relative to this bottom of the housing,
* a piston (14, 64) mounted so that it slides in this housing, and equipped at one end with a brake pad (17, 67) intended to come into contact with said friction track and comprising a cavity (18, 68) opening at the other end opposite the bottom of the housing, this cavity having an axial dimension substantially smaller than the axial dimension of this piston,
**characterized in that** the braking device comprises:
* a hollow central rod (21, 71) fixed to the bottom of this housing in the prolongation of the hydraulic connection port (13A, 63A) located in a central position and comprising a shouldered head (22, 72) at one end located inside the cavity, and
* a stack of Belleville washers (23, 73) compressed between this shouldered head and a flange (19, 69) that projects relative to the inside wall of the cavity, radially towards the central rod, and integral with this piston, this stack being designed to ensure full backward travel of the piston towards the bottom of the housing, until it is in a configuration in abutment with respect to the bottom of the calliper, when the braking pressure applied via said ports falls below a specified threshold.

2. Device according to claim 1, in which the cavity (18, 68) formed in the piston has symmetry of revolution about said axis of said housing.

3. Device according to claim 1 or claim 2, in which the piston (14) is all in one piece and the flange (19) is a component added onto the piston.

4. Device according to claim 3, in which the piston (14) is a forging in which a countersink is formed by machining at the bottom of the cavity opposite the shouldered head (22) of the central rod.

5. Device according to any one of Claims 1 to 4, in which the piston comprises a hole passing through the piston axially over its entire axial dimension, the flange forming a single piece with the rest of the piston and a plug (64') being fixed to the piston so as to seal the end of the hole on the side opposite the bottom of the housing.

6. Device according to any one of Claims 1 to 5, in which the piston comes to a stop against the bottom of the housing by means of the flange (19) with which the stack of Belleville washers interacts.

7. Device according to any one of Claims 1 to 6, in which the cavity (18, 68) has a volume greater than but close to that of the stack in the fully retracted configuration.

8. Device according to any one of Claims 1 to 7, in which the piston (14, 64) has an axial dimension with a value between 1/2 and 3/2 of the average width of said piston.

9. Device according to any one of Claims 1 to 8, in which the axial dimension of the cavity (18, 68) is between 40% and 90% of the axial dimension of the piston.

10. Device according to any one of Claims 1 to 9, in which the average transverse dimension of the cavity (18, 68) of the piston is between 1/2 and 2/3 of the average transverse dimension of said piston (14, 64).
